# DEMANDE DE BREVET EUROPEEN

(11) **EP 3 709 101 A1**
(43) Date de publication de la demande: **16.09.2020**
(21) Numéro de dépôt: 19162931.0
(22) Date de dépôt: 14.03.2019
(51) Int. Cl.: G04B 19/12, G04B 19/10

(54) **COMPOSANT D'HORLOGERIE OU DE BIJOUTERIE COMPOSITE AVEC STRUCTURE CERAMIQUE ET INSERTS**

(71) Demandeur: Omega SA, 2502 Bienne (CH)
(72) Inventeur: JEANRENAUD, Frédéric, 2300 La Chaux-de-Fonds (CH); KISSLING, Grégory, 2520 La Neuville (CH)
(74) Mandataire: ICB SA

(57) **Abrégé**

Procédé de fabrication d'un composant d'horlogerie ou de bijouterie composite:
- on réalise ;
une embase (1) dans un premier matériau, avec une première surface d'aspect (11) visible, et une première surface d'appui (12) ;
une structure (2) dans un deuxième matériau céramique ou saphir ou au moins partiellement amorphe, avec une deuxième surface d'aspect (21) et une deuxième surface d'appui (22), comportant un usinage traversant (23) sur toute son épaisseur;
- au moins un insert (3), réalisé dans un troisième matériau, pour chaque usinage traversant (23), et agencé pour se loger de façon complémentaire avec ledit usinage traversant (23);

- on solidarise par collage ladite embase (1) et chaque dite structure (2) en appui complémentaire entre chaque dite première surface d'appui (12) et chaque dite deuxième surface d'appui (22) complémentaire ;
- on solidarise chaque dit insert (3) avec son usinage traversant (23) respectif.

## Description

### Domaine de l'invention

L'invention concerne un procédé de fabrication d'un composant d'horlogerie ou de bijouterie composite.

L'invention concerne encore une montre comportant un élément d'habillage ou/et un cadran réalisé par ce procédé.

L'invention concerne encore un bijou comportant au moins un composant de bijouterie réalisé par le procédé

L'invention concerne le domaine des composants d'habillage ou d'affichage pour l'horlogerie, et le domaine de la bijouterie.

### Arrière-plan de l'invention

Sur une pièce d'horlogerie ou un bijou, il est usuel de délimiter par une cloison certains domaines pour mettre en valeur un affichage ou un composant particulier, par exemple un petit compteur de chronographe ou un guichet de quantième sur une montre à calendrier, ou encore le sertissage d'une pierre précieuse, ou autre.

L'utilisation d'une structure composite avec différents éléments assemblés tire rarement partie des propriétés, notamment optiques, de chacun d'eux.

### Résumé de l'invention

L'invention se propose de tirer parti de la nature différente des éléments constitutifs d'un composant composite d'horlogerie ou de bijouterie, pour mettre en valeur certaines fonctions ou certains constituants de ce composant, par exemple pour créer une surface réfléchissante ou structurée sur un afficheur.

A cet effet, l'invention concerne un procédé de fabrication d'un composant d'horlogerie ou de bijouterie composite selon la revendication 1.

L'invention concerne encore une montre comportant un élément d'habillage ou/et un cadran réalisé par ce procédé.

### Description sommaire des dessins

D'autres caractéristiques et avantages de l'invention apparaîtront à la lecture de la description détaillée qui va suivre, en référence aux dessins annexés, où :

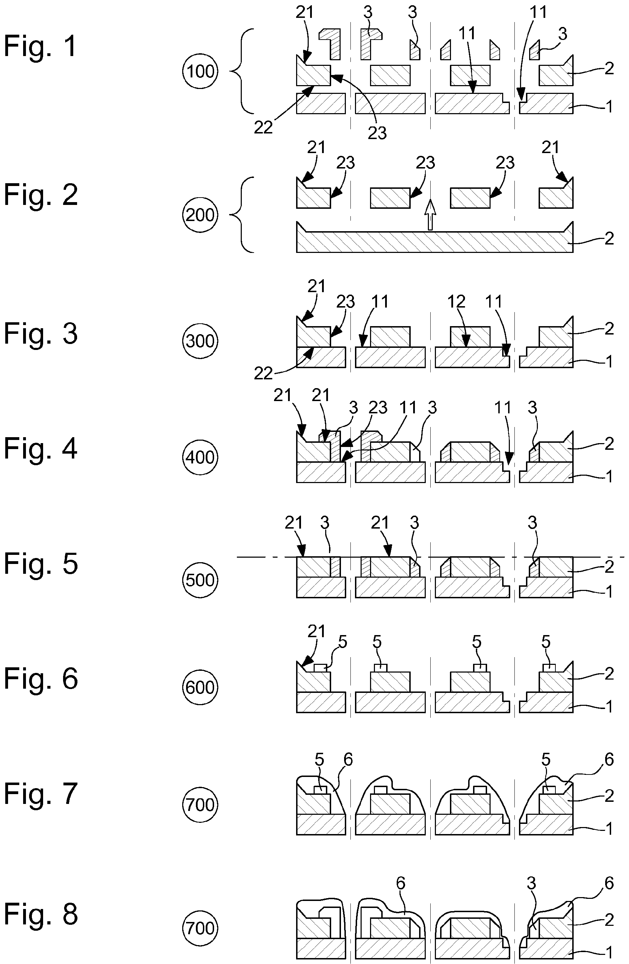

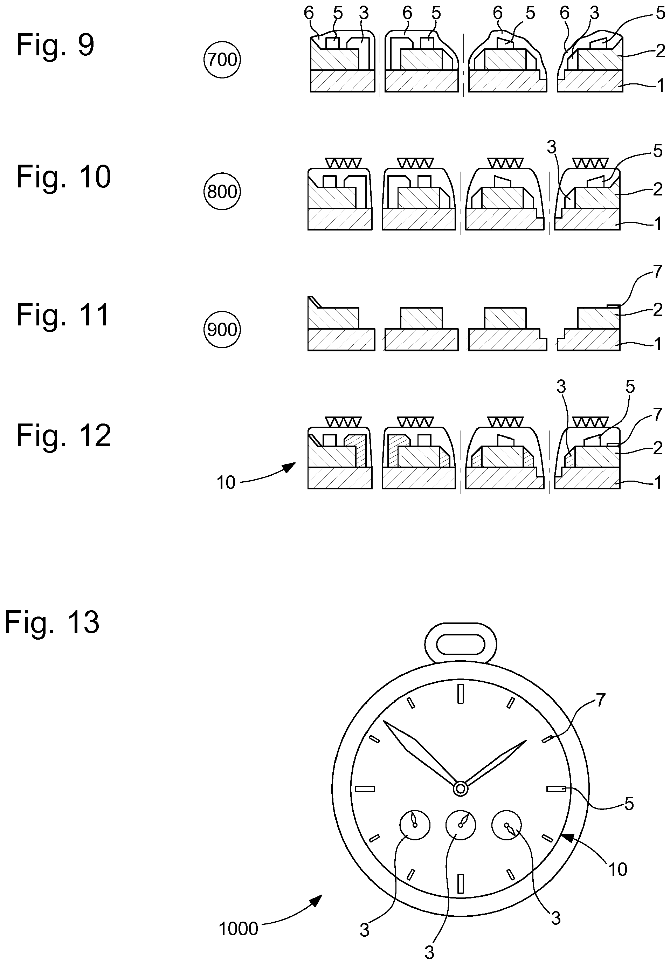

- les figures 1 à 11 représentent, de façon schématisée et en coupe, des séquences opératoires d'un procédé selon l'invention :
- la figure 1 représente, en vue éclatée sur trois niveaux, la réalisation d'une embase, d'une structure en matériau dur, et d'inserts;
- la figure 2 représente une première opération d'usinage d'usinages traversants dans la structure, dans le cas où ils n'ont pas été réalisés au préalable ;
- la figure 3 représente une première opération d'assemblage où on solidarise par collage l'embase et chaque structure;
- la figure 4 représente une deuxième opération d'assemblage où on solidarise chaque insert avec son usinage traversant respectif;
- la figure 5 représente une deuxième opération d'usinage où on aligne les surfaces supérieures des inserts sur un même plan;
- la figure 6 représente une opération de transfert par apposition et collage d'éléments décoratifs sur une deuxième surface d'aspect de la structure;
- la figure 7 représente une opération finale de recouvrement dans laquelle on recouvre la structure et chaque élément décoratif qu'elle porte par un dépôt d'une couche superficielle d'un matériau de traitement transparent par procédé PVD ou laquage ou zaponnage;
- la figure 8 représente, de façon analogue à la figure 7, une opération finale de recouvrement dans laquelle on recouvre la structure et chaque insert qu'elle porte par un dépôt d'une couche superficielle d'un matériau de traitement transparent par procédé PVD ou laquage ou zaponnage ;
- la figure 9 représente, de façon analogue aux figures 7 et 8, une opération finale de recouvrement dans laquelle on recouvre la structure et chaque élément décoratif et chaque insert qu'elle porte par un dépôt d'une couche superficielle d'un matériau de traitement transparent par procédé PVD ou laquage ou zaponnage;
- la figure 10 représente une opération finale d'usinage où on effectue un usinage de mise en géométrie de la couche superficielle et/ou un polissage de la surface externe de la couche superficielle ;
- la figure 11 représente, de façon similaire à la figure 6, une opération de tampographie de marquages sur une deuxième surface d'aspect de la structure;
- la figure 12 représente, de façon similaire à la figure 10, une opération finale d'usinage où on effectue un usinage de mise en géométrie de la couche superficielle et/ou un polissage de la surface externe de la couche superficielle qui recouvre les inserts, les éléments décoratifs, et les marquages ;
- la figure 13 représente une montre comportant un cadran en céramique, avec des inserts au fond desquels la céramique reste visible sous des aiguilles de petits compteurs de chronographe, et qui porte des appliques et index apposés selon le procédé selon l'invention.

### Description détaillée des modes de réalisation préférés

L'invention concerne un procédé de fabrication d'un composant d'horlogerie ou de bijouterie composite, caractérisé en ce qu'on effectue, dans cet ordre, les opérations suivantes :
- dans une opération initiale de préparation 100, on réalise :
   une embase 1 dans un premier matériau, avec au moins une première surface d'aspect 11 destinée à rester visible, et au moins une première surface d'appui 12 ;
   au moins une structure 2 dans un deuxième matériau céramique ou saphir ou en matériau au moins partiellement amorphe, avec une deuxième surface d'aspect 21 et au moins une deuxième surface d'appui 22 complémentaire à une première surface d'appui 12, et comportant au moins un usinage traversant 23 sur toute l'épaisseur de la structure 2, ou dans laquelle on réalise au moins un usinage traversant 23 sur toute l'épaisseur de la structure 2 lors d'une première opération d'usinage 200;
- au moins un insert 3, réalisé dans un troisième matériau, pour chaque usinage traversant 23, et agencé pour se loger de façon complémentaire avec l'usinage traversant 23;
- dans une première opération d'assemblage 300 on solidarise par collage l'embase 1 et chaque structure 2 en appui complémentaire entre chaque première surface d'appui 12 et chaque deuxième surface d'appui 22 complémentaire ;
- dans une deuxième opération d'assemblage 400 on solidarise chaque insert 3 avec son usinage traversant 23 respectif.

Par exemple un tel insert 3 délimite un petit compteur sur un cadran, ou l'encadrement d'un guichet, ou similaire.

Selon une caractéristique particulière, après la deuxième opération d'assemblage 400, on effectue une deuxième opération d'usinage 500 avec un usinage de mise en géométrie des surfaces supérieures des inserts 3 pour les aligner sur un même plan.

Selon une caractéristique particulière, lors de l'opération initiale de préparation 100, on réalise chaque structure 2 avec la même épaisseur, et, lors de la deuxième opération d'usinage 500 on aligne les surfaces supérieures des inserts 3 sur un même plan, notamment constitué par les deuxièmes surfaces d'aspect 21 de la structure 2, ou des structures 2, quand ces deuxièmes surfaces d'aspect 21 sont alignées.

Selon une caractéristique particulière, avant l'exécution de la première opération d'assemblage 300, on effectue une première opération de recouvrement 500 au moins de chaque première surface d'aspect 11 par une première couche 4 d'un quatrième matériau.

Selon une caractéristique particulière, après la première opération d'assemblage 300 ou après la deuxième opération d'assemblage 400, on effectue au moins une opération de transfert 600 par apposition et collage d'au moins un élément décoratif 5 sur au moins une deuxième surface d'aspect 21 que comporte au moins une structure 2.

Selon une caractéristique particulière, après au moins une opération de transfert 600, on effectue une opération finale de recouvrement 700 dans laquelle on recouvre la structure 2 et chaque élément décoratif 5 que porte la structure 2 par un dépôt d'une couche superficielle 6 d'un matériau de traitement transparent par procédé PVD ou laquage ou zaponnage.

Selon une caractéristique particulière, après la deuxième opération d'assemblage 400, on effectue une opération finale de recouvrement 700 dans laquelle on recouvre au moins chaque structure 2 et chaque insert 3 que porte la structure 2 par un dépôt d'une couche superficielle 6 d'un matériau de traitement transparent par procédé PVD ou laquage ou zaponnage.

Selon une caractéristique particulière, lors de l'opération initiale de préparation 100, on réalise au moins un insert 3 épaulé pour coopérer en appui à la fois avec un usinage traversant 23, et avec la deuxième surface d'aspect 21 que comporte la structure 2 qui porte l'insert 3, comme l'insert de gauche sur les figures, cette configuration permet de cacher des éventuelles égrisures consécutives à l'usinage des usinages traversants 23, qui peuvent survenir lors d'une découpe au jet d'eau ou d'un usinage laser.

Selon une caractéristique particulière, lors de l'opération initiale de préparation 100, on choisit un matériau métallique, notamment mais non limitativement un alliage cuivreux, par exemple un laiton, comme premier matériau de l'embase 1.

Selon une caractéristique particulière, lors de l'opération initiale de préparation 100, on choisit une céramique comme premier matériau de l'embase 1.

Selon une caractéristique particulière, lors de l'opération initiale de préparation 100, on choisit un alliage d'or ou un alliage de platine ou une céramique comme troisième matériau d'au moins un insert 3.

Selon une caractéristique particulière, lors de la première opération de recouvrement 500, on choisit comme quatrième matériau un alliage d'or ou un alliage de platine.

Selon une caractéristique particulière, après l'opération finale de recouvrement 700, dans une opération finale d'usinage 800 on effectue un usinage de mise en géométrie de la couche superficielle 6 et/ou un polissage de la surface externe de la couche superficielle 6.

Selon une caractéristique particulière, après la première opération d'assemblage 300, on effectue au moins une opération de décalquage 900 lors de laquelle on applique par tampographie au moins un marquage 7 sur au moins une deuxième surface d'aspect 21 que comporte au moins une structure 2.

Selon une caractéristique particulière, lors de l'opération initiale 100 on réalise au moins une structure 2 avec au moins une surface de réception usinée pour la réception d'au moins un élément décoratif 5 ou d'un marquage 7.

Selon une caractéristique particulière, lors de l'opération initiale 100 on réalise au moins une structure 2 avec au moins un logement creusé pour la réception d'une couche intermédiaire de décor dans un matériau coloré autre que le matériau de la structure 2.

Selon une caractéristique particulière, on choisit un vernis acrylique ou époxyde comme matériau de la couche superficielle 6.

Selon une caractéristique particulière, on choisit le troisième matériau résistant à l'oxydation, ou on lui applique un revêtement agencé pour résister à l'oxydation ou un dorage ou un rhodiage. Par exemple on réalise au moins un insert 3 en laiton rhodié, ou similaire.

Selon une caractéristique particulière, on réalise au moins une surface d'aspect 11 saillante ou rentrante ou affleurante par rapport à une première surface d'appui 12.

L'invention est illustrée sur les figures avec une embase 1 unique et une structure 2 unique, il est bien clair qu'elle est réalisable aussi avec une embase unique portant une pluralité de structures 2, entre lesquelles on peut faire apparaître un décor ou un marquage comme sous chaque usinage traversant 23, ou bien avec une structure 2 unique appuyée sur plusieurs embases 1, par exemple pour une fixation sur une platine ou une boîte de part et d'autre d'un espace laissé libre pour le logement d'autres fonctions.

Selon une caractéristique particulière, on fabrique le composant horloger pour former un élément d'habillage ou un cadran.

L'invention concerne encore une montre 1000 comportant au moins un composant d'horlogerie ou de bijouterie réalisé par le procédé selon l'invention.

L'invention concerne encore un bijou comportant au moins un composant de bijouterie réalisé par le procédé selon l'invention.

## Revendications

1. Procédé de fabrication d'un composant d'horlogerie ou de bijouterie composite, **caractérisé en ce qu'**on effectue, dans cet ordre, les opérations suivantes :
- dans une opération initiale de préparation (100), on réalise :
une embase (1) dans un premier matériau, avec au moins une première surface d'aspect (11) destinée à rester visible, et au moins une première surface d'appui (12) ;
au moins une structure (2) dans un deuxième matériau céramique ou saphir ou en matériau au moins partiellement amorphe, avec une deuxième surface d'aspect (21) et au moins une deuxième surface d'appui (22) complémentaire à une dite première surface d'appui (12), et comportant au moins un usinage traversant (23) sur toute l'épaisseur de ladite structure (2), ou dans laquelle on réalise au moins un usinage traversant (23) sur toute l'épaisseur de ladite structure (2) lors d'une première opération d'usinage (200);
- au moins un insert (3), réalisé dans un troisième matériau, pour chaque dit usinage traversant (23), et agencé pour se loger de façon complémentaire avec ledit usinage traversant (23);
- dans une première opération d'assemblage (300) on solidarise par collage ladite embase (1) et chaque dite structure (2) en appui complémentaire entre chaque dite première surface d'appui (12) et chaque dite deuxième surface d'appui (22) complémentaire ;
- dans une deuxième opération d'assemblage (400) on solidarise chaque dit insert (3) avec son usinage traversant (23) respectif.

2. Procédé selon la revendication 1, **caractérisé en ce que**, après ladite deuxième opération d'assemblage (400), on effectue une deuxième opération d'usinage (500) avec un usinage de mise en géométrie des surfaces supérieures desdits inserts (3) pour les aligner sur un même plan.

3. Procédé selon la revendication 2, **caractérisé en ce que**, lors de ladite opération initiale de préparation (100), on réalise chaque dite structure (2) avec la même épaisseur, et **en ce que**, lors de ladite deuxième opération d'usinage (500) on aligne lesdites surfaces supérieures desdits inserts (3) sur un même plan.

4. Procédé selon l'une des revendications 1 à 3, **caractérisé en ce que**, avant l'exécution de ladite première opération d'assemblage (300), on effectue une première opération de recouvrement (500) au moins de chaque dite première surface d'aspect (11) par une première couche (4) d'un quatrième matériau.

5. Procédé selon l'une des revendications 1 à 4, **caractérisé en ce que**, après ladite première opération d'assemblage (300) ou après ladite deuxième opération d'assemblage (400), on effectue au moins une opération de transfert (600) par apposition et collage d'au moins un élément décoratif (5) sur au moins une dite deuxième surface d'aspect (21) que comporte au moins une dite structure (2).

6. Procédé selon la revendication 5, **caractérisé en ce que**, après au moins une dite opération de transfert (600), on effectue une opération finale de recouvrement (700) dans laquelle on recouvre ladite structure (2) et chaque dit élément décoratif (5) que porte ladite structure (2) par un dépôt d'une couche superficielle (6) d'un matériau de traitement transparent par procédé PVD ou laquage ou zaponnage.

7. Procédé selon l'une des revendications 1 à 6, **caractérisé en ce que**, après ladite deuxième opération d'assemblage (400), on effectue une opération finale de recouvrement (700) dans laquelle on recouvre au moins chaque dite structure (2) et chaque dit insert (3) que porte ladite structure (2) par un dépôt d'une couche superficielle (6) d'un matériau de traitement transparent par procédé PVD ou laquage ou zaponnage.

8. Procédé selon l'une des revendications 1 à 7, **caractérisé en ce que**, lors de ladite opération initiale de préparation (100), on réalise au moins un dit insert (3) épaulé pour coopérer en appui à la fois avec un dit usinage traversant (23), et avec ladite deuxième surface d'aspect (21) que comporte ladite structure (2) qui porte ledit insert (3).

9. Procédé selon l'une des revendications 1 à 8, **caractérisé en ce que**, lors de ladite opération initiale de préparation (100), on choisit un alliage cuivreux comme dit premier matériau de ladite embase (1).

10. Procédé selon l'une des revendications 1 à 8, **caractérisé en ce que**, lors de ladite opération initiale de préparation (100), on choisit une céramique comme dit premier matériau de ladite embase (1).

11. Procédé selon l'une des revendications 1 à 10, **caractérisé en ce que**, lors de ladite opération initiale de préparation (100), on choisit un alliage d'or ou un alliage de platine ou une céramique comme dit troisième matériau d'au moins un dit insert (3).

12. Procédé selon la revendication 4 et l'une des revendications 1 à 11, **caractérisé en ce que**, lors de ladite première opération de recouvrement (500), on choisit comme quatrième matériau un alliage d'or ou un alliage de platine.

13. Procédé selon la revendication 7 et l'une des revendications 1 à 12, **caractérisé en ce que**, après ladite opération finale de recouvrement (700), dans une opération finale d'usinage (800) on effectue un usinage de mise en géométrie de ladite couche superficielle (6) et/ou un polissage de la surface externe de ladite couche superficielle (6).

14. Procédé selon l'une des revendications 1 à 13, **caractérisé en ce que**, après ladite première opération d'assemblage (300), on effectue au moins une opération de décalquage (900) lors de laquelle on applique par tampographie au moins un marquage (7) sur au moins une dite deuxième surface d'aspect (21) que comporte au moins une dite structure (2).

15. Procédé selon l'une des revendications 1 à 14, **caractérisé en ce que**, lors de ladite opération initiale (100) on réalise au moins une dite structure (2) avec au moins une surface de réception usinée pour la réception d'au moins un dit élément décoratif (5) ou d'un marquage (7).

16. Procédé selon l'une des revendications 1 à 15, **caractérisé en ce que**, lors de ladite opération initiale (100) on réalise au moins une dite structure (2) avec au moins un logement creusé pour la réception d'une couche intermédiaire de décor dans un matériau coloré autre que le matériau de ladite structure (2).

17. Procédé selon la revendication 6 ou 7, **caractérisé en ce qu'**on choisit un vernis acrylique ou époxyde comme matériau de ladite couche superficielle (6).

18. Procédé selon l'une des revendications 1 à 17, **caractérisé en ce qu'**on choisit ledit troisième matériau résistant à l'oxydation, ou on lui applique un revêtement agencé pour résister à l'oxydation ou un dorage ou un rhodiage.

19. Procédé selon l'une des revendications 1 à 18, **caractérisé en ce qu'**on réalise au moins une dite surface d'aspect (11) saillante ou rentrante ou affleurante par rapport à une dite première surface d'appui (12).

20. Procédé selon l'une des revendications 1 à 19, **caractérisé en ce qu'**on fabrique ledit composant horloger pour former un élément d'habillage ou un cadran.

21. Montre (1000) comportant au moins un composant d'horlogerie ou de bijouterie réalisé par le procédé selon l'une des revendications 1 à 20.
